**Europäisches Patentamt**

**European Patent Office**

**Office européen des brevets**

(11) Veröffentlichungsnummer : **0 191 425 B2**

(12) **NEUE EUROPÄISCHE PATENTSCHRIFT**

(45) Veröffentlichungstag der neuen Patentschrift :
06.05.92 Patentblatt 92/19

(21) Anmeldenummer : 86101577.4

(22) Anmeldetag : 07.02.86

(51) Int. Cl.⁵ : **A01B 69/02**

(54) Spurreisser für eine landwirtschaftliche Maschine.

(30) Priorität : **13.02.85 DE 3504906**

(43) Veröffentlichungstag der Anmeldung :
**20.08.86 Patentblatt 86/34**

(45) Bekanntmachung des Hinweises auf die
Patenterteilung :
**16.08.89 Patentblatt 89/33**

(45) Bekanntmachung des Hinweises auf die
Entscheidung über den Einspruch :
**06.05.92 Patentblatt 92/19**

(84) Benannte Vertragsstaaten :
**AT DE FR GB SE**

(56) Entgegenhaltungen :
**DE-A- 2 708 854**

(56) Entgegenhaltungen :
**DE-A- 3 242 932**
**FR-A- 2 333 429**
**Roger Prospekt Seiten 163-164**
**"Anbau-Drillmaschinen"**
**Roger "Sématic" Prospekt**
**Tracteurs & Machines Agricoles, 1973, Nr.9**
**(September), Paris, E. Dalleine "Semis d'au-**
**tomne après labours et semourscombinés**
**avec outils de facons superficielles," Seite 85**
**Roger "Roto Culteur", Prospekt 1971**
**Nordsten "Lift-O-matic", Prospekt 1965**

(73) Patentinhaber : **Amazonen-Werke H. Dreyer**
**GmbH & Co. KG**
**Am Amazonenwerk 9-13**
**W-4507 Hasbergen-Gaste (DE)**

(72) Erfinder : **Gattermann, Bernd**
**Eichenwall 3**
**W-2871 Hude i.O. (DE)**

EP 0 191 425 B2

Jouve, 18, rue Saint-Denis, 75001 PARIS

## Beschreibung

Die Erfindung betrifft einen Spuranreisser gemäss des Oberbegriffes des Anspruches 1.

Durch die DE-OS 32 42 932 ist bereits ein derartiger Spuranreisser bekannt. Dieser Spuranreisser ist mittels eines Kreuzgelenkes an dem Rahmen einer landwirtschaftlichen Maschine angelenkt. Weiterhin ist an dem Spuranreisser ein Spannelement angeordnet, welches den Spuranreisser in seiner vorgegebenen Betriebsstellung hält. Aufgrund seiner Anlenkung und Befestigung kann der Spuranreisser beim Auftreffen auf Hindernissen schräg nach hinten - oben ausweichen.

Nachteilig ist bei dem bekannten Spuranreisser zunächst der relativ aufwendige Konstruktions- und Bauaufwand, so dass diese Ausführung sehr teuer ist, Weiterhin kommt es zu Beschädigungen an dem Spuranreisser, wenn das Hindernis auf welches der Spuranreisser auftrifft, oberhalb der Scheibendrehachse der Spuranreisserscheibe angreift. Da die Spuranreisserscheibe in diesen Fällen dann das Hindernis unterfährt, kann sie nicht schräg nach hinten - oben ausweichen. Somit kommt es zu unvermeidbaren Beschädigungen an dem Spuranreisser.

Der Erfindung liegt die Aufgabe zugrunde, eine einfache und preiswerte Sicherungsmöglichkeit für Spuranreisser zu schaffen.

Diese Aufgabe wird erfindungsgemäss durch das Kennzeichen des Anspruches 1 gelöst. Infolge dieser Massnahme wird der Spuranreisser durch das Schutzelement über das jeweilige Hindernis hinweggenoben.

Das Schutzelement bekommt vor der Scheibe des Spuranreissers Kontakt mit dem Hindernis. Das Schutzelement hat für die Scheibe die Wirkung einer Kufe oberhalb der Scheibendrehachse, so dass die Scheibe auch über Hindernisse hinweggehoben wird, die oberhalb der Scheibendrehachse an die Spuranreisserscheibe angreifen würden. Durch eine entsprechende Formgebung des Schurzelementes kann man festlegen, bis zu welcher Hindernishöhe das Schutzelement wirksam ist, so dass der Spuranreisser möglichst allen Hindernissen unbeschadet ausweichen kann. Es ist denkbar, dass mehrere Schutzelemente übereinander angeordnet sind. Auch können verschieden geformte Schutzelemente vorgesehen sein, die entsprechend des jeweiligen Einsatzfalles mittels Schnellverschlüssen an dem Auslegerarm des Spuranreissers befestigt bzw. ausgetauscht werden. Dadurch dass die unterste Kante des Schutzelementes sich in Betriebsstellung des Spuranreissers zumindest annähernd unterhalb einer waagerechten durch die Scheibendrehachse verlaufenden Linie befindet, wird sichergestellt, dass die Scheibe in jedem Falle über Hindernisse, wie beispielsweise grosse Steine, die auf der Bodenoberfläche liegen, Querfurchen in der Bodenoberfläche oder Vertiefungen bei besonders grober Pflugfurche hinweggehoben wird. Das Schutzelement verhindert, dass die Scheibe oberhalb ihrer Drehachse Kontakt mit Hindernissen bekommen kann. Dadurch, dass das Schutzelement in der Betriebsstellung des Spuranreissers eine von der Schiebe ausgehende schrag nach oben und schräg nach vorn in Richtung des Gelenkes bzw. Maschinenmitte verlaufende Kante oder Kufe aufweist, wird auch ein Schutz für den gesamten Spuranreisser, inklusive des Auslegerarmes erreicht, weil sich das Schutzelement auch zumindest teilweise vor dem Auslegerarm befindet und so den Auslegerarm ebenfalls über die Hindernisse hinweghebt.

Durch die Publikation Dalleinne: "Semis d'automne après labours et semoirs commbinés avec outils de façons superficielles"; tracteurs & machines agricoles, (Sept. 1973) No, 9, Page 85" ist eine "Roger" Drillmaschine bekannt, Diese Drillmaschine weist Spurreißer auf, wobei die Spurreißer, wie üblicher Weise mittels Gelenke um eine in Fahrtrichtung verlaufende Schwenkachse in aufrechter Ebene verschwenkbar sind. Am Ende des Auslegerarmes sind Spurreißerscheiben drehbar gelagert. Der Auslegerarm ist an seinem äußeren Ende um die Scheibe herumgeführt, so daß der Auslegerarm die Scheibe in Fahrtrichtung gesehen nach vorne überragt. Dieser Auslegerarm ist in einer Klemmhalterung, die ein "Roger" Prospekt aus dem Jahre 1971 zeigt, verdrehbar geführt und wird mittels einer Klemmschraube in seiner Position fixiert, so daß die unterste Kante des Auslegerarmes in Betriebsstellung des Spurreißers sich weit oberhalb einer waagerecht durch die Scheibendrehachse verlaufenden Linie befindet. Der Auslegerarm befindet sich in der Weise oberhalb dieser Linie, daß der Spurreißer so auf Hindernisse auftreffen kann, daß sie oberhalb der Scheibendrehachse an der Spuranreißerscheibe angreifen. Somit unterfährt die Spuranreißerscheibe in diesen Fällen das Hindernis, so daß sie nicht mehr nach oben ausweichen kann. Auch hier kommt es dann, zu unvermeidbaren Beschädigungen an den Spuranreißern. Es ist der Vorveröffung "Dalleinne" und dem Prospekt "Roger" nicht zu entnehmen, daß die Auslegerarme so eingestellt werden können, daß sie als Schutzelement dienen und Beschädigungen an dem Spuranreißer verhindern. Auch besitzt der Auslegerarm bzw. der Spuranreißer nach "Roger" kein Schutzelement für die Spuranreißerscheibe, welches eine von der Scheibe ausgehende schräg nach oben und schräg nach vorne in Richtung des Gelenkes bzw, der Maschinenmitte verlaufenden Kante oder Kufe aufweisen würde.

Ein besonders guter Schutz wird für die Scheibe erfindungsgemäss dadurch erreicht, dass das Schutzelement die Vorderseite der Scheibe zumindest teilweise umschliesst.

Weitere Einzelheiten der Erfindung sind den übrigen Unteransprüchen und der Beispielsbeschreibung zu

2

EP 0 191 425 B2

entnehmen. Hierbei zeigen

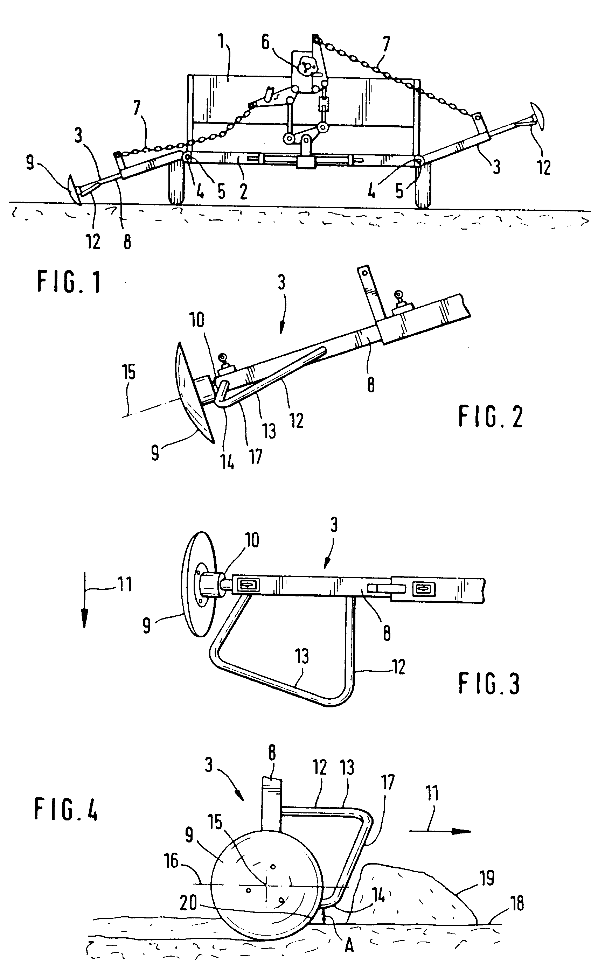

Fig. 1 eine Sämaschine mit erfindungsgemassen Spuranreissern in der Vorderansicht,
Fig. 2 den linken Spuranreisser in vergrössertem Massstab in der Vorderansicht,
Fig. 3 den Spuranreisser gemäss Fig. 2 in der Draufsicht,
Fig. 4 den Spuranreisser gemäss Fig. 2 in der Ansicht von links,
Fig. 5 eine andere Ausführung des linken Spuranreissers in der Vorderansicht,
Fig. 6 den Spuranreisser gemäss Fig. 5 in der Draufsicht und
Fig. 7 den Spuranreisser gemäss Fig. 6 in der Ansicht von links.

An der Sämaschine 1 sind an den beiden äusseren Seiten des Rahmens 2 jeweils die Spuranreisser 3 mit Hilfe der Gelenke 4 in aufrechter Ebene schwenkbar angeordnet. Die Spuranreisser 3 können somit um die in Fahrtrichtung und jeweils durch die Gelenke 4 verlaufende Schwenkachsen 5 angehoben und abgesenkt werden. An dem Rahmen 2 der Sämaschine ist der Spurreisserwechselautomat 6 angebracht. Zwischen den Spuranreissern 3 und dem Spuranreisserwechselautomaten 6 sind die Ketten 7 angeordnet, so dass die Spuranreisser 3 wechselseitig abwechselnd jeweils am Feldende in die Ausserbetriebssellung angehoben und in die Betriebsstellung abgesenkt werden können.

Jeder Spuranreisser 3 weist den Auslegerarm 8 und die Scheibe 9 auf, die am jeweiligen Ende 10 des jeweiligen Auslegerarmes 8 mittels einer Lagerung frei drehbar gelagert ist. In Fahrtrichtung 11 gesehen ist vor dem Auslegerarm 8 des Spuranreissers 3 das Schutzelement 12 angeordnet. Dieses als Bügel 13 ausgebildete Schutzelememt 12 überragt die Scheibe 9 in Fahrtrichtung 11 gesehen nach vorn. Die unterste Kante 14 des Bügels 13 befindet sich in Betriebsstellung des Spuranreissers 3 unterhalb der waagerechten durch die Scheibendrehachse 15 verlaufenden Linie 16. Weiterhin verläuft die vordere Kante 17 des Bügels 13 in der Betriebsstellung des Spur anreissers 3 von der Scheibe 9 ausgehend schräg nach oben und schräg nach vorn in Richtung des Gelenkes 4 bzw. der Maschinenmitte. Diese vordere Kante 17 hat in der Praxis die Wirkung einer Kufe. wenn der Bügel 13 auf ein Hindernis auftrifft.

Wenn der Spuranreisser 3 auf das sich auf dem Boden 18 befindliche Hindernis 19 trifft, hebt der Bügel 13 den Spuranreisser 3 über das Hindernis 19 hinweg bzw. die Scheibe 9 soweit an, dass die untere schräge Hälfte 20 der Scheibe 9 auf das Hindernis 19 auftrifft und die Scheibe 9 somit unbeschadet über das Hindernis 19 hinwegrollen kann. Die schräge vordere Kante 17 des Schutzbügels 13 verhindert also, dass die Scheibe 9 oberhalb der Scheibenmitte bzw. der Scheibendrehachse 15 Kontakt mit dem Hindernis 19 bekommt. Während des normalen Einsatzes hat der Bügel 13 keinen Bodenkontakt, sondern weist einen kleinen Abstand A zur Bodenoberfläche 18 auf. Somit wird verhindert, dass der Bügel 13 Bodenteile vor sich herschiebt

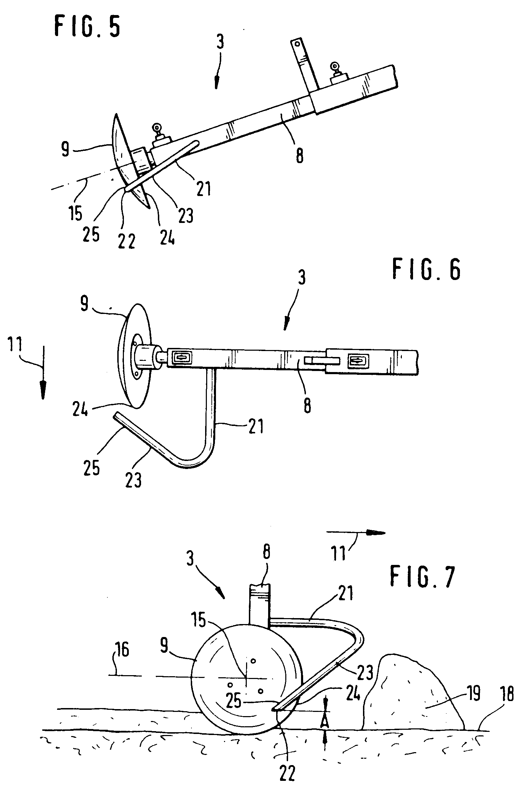

Der Bügel 21 gemäss dem Ausführungsbeispiel entsprechend den Fig. 5 bis 7 weist eine etwas andere Formgebung als der Bügel 13 auf. Der als Schutzelement ausgebildete Bügel 21 ist ebenfalls an dem Auslegerarm 8 des Spuranreissers 3 befestigt. Der Bügel 21 überragt die Scheiben 9 in Fahrtrichtung 11 gesehen nach vorn. Die unterste Kante 22 des Bügels 21 befindet sich in Betriebsstellung des Spuranreissers 3 unterhalb der waagerechten durch die Scheibendrehachse 15 verlaufenden Linie 16. Weiterhin verläuft die vordere Kante 23 des Bügels 21 in der Betriebsstellung des Spuranreissers 3 von der Scheibe 9 ausgehend schräg nach oben und schräg nach vorn in Richtung des Gelenkes 4 bzw. der Maschinenmitte. Diese vordere Kante 23 hat in der Praxis die Wirkung einer Kufe, wenn der Bügel 21 auf ein Hindernis trifft. Der Bügel 21 umschliesst teilweise die Vorderseite 24 der Scheibe 9 und überragt die Scheibe 9 nach aussen hin um das kurze Stück 25.

Die Wirkungsweise des Bügels 21 ist folgendermassen:

Wenn die Sämaschine auf ebenen Böden eingesetzt wird, hat der Bügel 21 keinen Bodenkontakt. Befinden sich nun jedoch auf der Bodenoberfläche 18 Hindernisse 19 in Form von grossen Steinen oder groben, grossen Kluten bzw. in der Bodenoberfläche Hindernisse in Form von tiefen Querfurchen oder tiefen Furchen bei grober Pflugfurche, so wird die Scheibe 9 bzw. der Auslegerarm 8 über diese Hindernisse 19 hinweggehoben, bevor die Scheibe 9 oberhalb der Scheibendrehachse 15 Kontakt mit dem Hindernis bekommen kann. Die vordere schräge Kante 23 des Bügels 21 läuft auf das Hindernis 18 auf. Das Hindernis 19 gleitet an der Kante 23 vorbei und hebt aufgrund der Schräge dieser Kante 23 die Scheibe 9 bzw. den Auslegerarm 8 des Spuranreissers 3 an. Die Scheibe 9 wird über den Bügel 21 durch das Auflaufen auf das Hindernis 19 soweit angehoben, dass der untere Teil der Scheibe 9 über das Hindernis hinwegrollen kann. Durch den Bügel 21 wird also verhindert. dass die Scheibe 9 oberhalb der Scheibendrehachse 15 einen Kontakt mit dem Hindernis bekommt, der die Scheibe 9 nach unten drücken würde. Aufgrund des Bügels 21 weicht der Spuranreisser 3 immer beim Auftreffen auf Hindernissen nach oben aus; d.h. er hebt sich somit über auf dem Boden 18 liegende Hindernisse oder über sich in der Bodenoberfläche befindende Vertiefungen hinweg. Der Bügel 21 bewirkt also, dass der Spuranreisser 3 allen Hindernissen nach oben ausweicht, die niedriger als der Bügel 21 sind. Durch die entsprechende Formgebung des Bügels 21 kann die Höhe der Hindernisse, denen der Spuranreisser ausweichen soll, einfach festgelegt werden.

3

**Patentansprüche**

1. Spuranreisser (3) für eine landwirtschaftliche Maschine (1), der an dem Rahmen (2) der Maschine mittels eines Gelenkes (4) befestigt und um eine zumindest annähernd in Fahrtrichtung verlaufende Schwenkachse (5) in aufrechter Ebene schwenkbar ist. wobei der Spuranreisser einen Auslegerarm (8) und eine an dem Ende des Auslegerarmes drehbar gelagerte Scheibe (9) aufweist dadurch gekennzeichnet, dass in Fahrtrichtung (11) gesehen vor dem Auslegerarm (8) ein Schutzelement (12, 13, 21) angeordnet ist und die Scheibe (9) in Fahrtrichtung (11) gesehen nach vorn überrag, dass die unterste Kante (14, 22) des Schutzelementes (12, 13, 21) sich in Betriebssteilung des Spuranreissers (3) zumindest annähernd unterhalb einer waagerechten durch die Scheibendrenachse (15) verlaufende Linie (16) befindet und dass das Schutzelement (12, 13, 21) in der Betriebsstellung des Spuranreissers (3) eine von der Scheibe (9) ausgehende schrag nach oben und schräg nach vorn in Richtung des Gelenkes (4) bzw. Maschinenmitte verlaufende Kante (17, 23) oder Kufe aufweist.

2. Spuranreisser nach Anspruch 1, dadurch gekennzeichnet, dass das Schutzelement (12, 13, 21) in der Betriebsstellung des Spuranreissers (3) eine von der Scheibe (9) ausgehende schrag nach oben verlaufende Kufe (17, 23) aufweist.

3. Spuranreisser nach Anspruch 1, dadurch gekennzeichnet, dass das Schutzelement (21) die Vorderseite (24) der Scheibe (9) zumindest teilweise umschliesst.

4. Spuranreisser nach einem der vorstehenden Ansprüche. dadurch gekennzeichnet dass das Schutzelement (12) als Kufe (13, 21) ausgebildet ist.

5. Spuranreisser nach einem der vorstehenden Ansprüche, dadurch gekennzeichnet. dass das Schutzelement (12) als Bügel (13, 21 ) ausgebildet ist.

6. Spurenreisser nach Anspruch 3, dadurch gekennzeichnet, dass das Schutzelement (21) an dem Auslegerarm (8) befestigt ist und die Scheibe (9) nach aussen hin überragt.

**Claims**

1. Track marker (3) for an agricultural machine (1), which is mounted on the frame (2) of the machine by means of a pivot joint (4) and is pivotable in a vertical plane about a pivotal axle (5), extending at least approximately in the direction of travel, the track marker including an extension arm (8) and a disc (9), which is rotatably mounted on the end of the arm, characterised in that a protective means (12, 13, 21) is disposed in front of the arm (8) when viewed with respect to the direction of travel (11) and protrudes forwardly of the disc (9) when viewed with respect to the direction of travel (11), in that, when the track marker (3) is in its operative position, the lowermost edge (14, 22) of the protective means (12, 13, 21) is situated at least approximately beneath a horizontal line (16), which extends through the axis of rotation (15) of the disc, and in that, when the track marker (3) is in its operative position, the protective means (12, 13, 21) includes an edge (17, 23) or runner which extends inclinedly upwardly from the disc (9) and extends inclinedly forwardly in the direction of the pivot joint (4) or centre of the machine.

2. Track marker according to claim 1, characterised in that, when the track marker (3) is in its operative position, the protective means (12, 13, 21) includes a runner (17, 23) which extends inclinedly upwardly from the disc (9).

3. Track marker according to claim 1, characterised in that the protective means (21) at least partially surrounds the front end (24) of the disc (9).

4. Track marker according to one of the preceding claims, characterised in that the protective means (12) is in the form of a runner (13, 21).

5. Track marker according to one of the preceding claims, characterised in that the protective means (12) is in the form of a bar (13, 21).

6. Track marker according to claim 3, characterised in that the protective means (21) is mounted on the arm (8) and protrudes outwardly beyond the disc (9).

**Revendications**

1. Traceur (3) pour machine agricole (1), fixé au châssis (2) de la machine à l'aide d'une articulation (4) et pouvant pivoter dans un plan vertical, autour d'un axe (5) s'étendant sensiblement dans la direction de déplacement, le traceur se composant d'un bras (8) dont l'extrémité porte à rotation un disque (9), traceur caractérisé en ce que : en amont du bras (8), dans le sens de déplacement (11), il est prévu un élément protecteur (12, 13, 21) qui déborde à l'avant du disque (9) dans le sens de déplacement (11), l'arête inférieure (14, 22) de l'élément protecteur (12, 13, 21) se trouve, lorsque le traceur (3) est en position de fonctionnement, au moins sensiblement en-dessous d'une ligne (16) horizontale passant par l'axe de rotation (15) du disque et l'élément protecteur (12, 13, 21) comporte en position de fonctionnement du tracteur (3), une arête ou patin (17, 23) dirigé en biais vers le haut et vers l'avant en direction de l'articulation (4) ou du milieu de la machine, à partir du disque (9).

2. Traceur selon la revendication 1, caractérisé en ce que lorsque le traceur (3) est en position de fonctionnement, l'élément protecteur (12, 13, 21) comporte un patin (17, 23) partant du disque (9) et incliné en remontant.

3. Traceur selon la revendication 1, caractérisé en ce que l'élément de protection (21) entoure au moins partiellement le côté avant (24) du disque (9).

4. Traceur selon l'une des revendications précédentes, caractérisé en ce que l'élément protecteur (12) est en forme de patin (13, 21).

5. Traceur selon l'une des revendications précédentes, caractérisé en ce que l'élément protecteur (12) est en forme d'étrier (13, 21).

6. Traceur selon la revendication 3, caractérisé en ce que l'élément protecteur (21) est fixé au bras (8) et déborde vers l'extérieur par rapport au disque (9).

FIG. 1

FIG. 2

FIG. 3

FIG. 4

FIG. 5

FIG. 6

FIG. 7